# EUROPÄISCHE PATENTSCHRIFT

(11) **EP 0 577 919 B1**
(45) Veröffentlichungstag und Bekanntmachung des Hinweises auf die Patenterteilung: **29.05.2002**
(21) Anmeldenummer: 93101347.8
(22) Anmeldetag: 29.01.1993
(51) Int. Cl.: G06F 15/16

(54) **Zugriffssteuerung für gekoppelte maskenprogrammierte Mikrocontroller**
Access control for coupling mask-programmed micro-controllers
Contrôle d'accès pour couplage de microcontrôleurs programmés par masque

(30) Priorität: 04.07.1992 DE 4222043
(43) Veröffentlichungstag der Anmeldung: 12.01.1994
(73) Patentinhaber: Moeller GmbH, 53115 Bonn (DE)
(72) Erfinder: Hubert, Rolf, Dipl.-Ing., D-5300 Bonn 3 (DE)

(56) Entgegenhaltungen:
- EP-A- 0 301 160
- DE-A- 3 137 313
- DE-A- 3 732 007
- US-A- 4 394 730

## Beschreibung

Die Erfindung bezieht sich auf eine Speicherzugriffssteuerung für gekoppelte maskenprogrammierte Mikrocontroller, insbesondere bei Anwendungen für Speicherprogrammierbare Steuerung im Low-Cost-Bereich, mit mindestens zwei über einen gemeinsamen Daten-/Adressbus auf ein gemeinsamen Programm-Programm-/Datenspeicher zugreifende Mikrocontroller, wobei einer der Mikrocontroller als Master und einer oder weitere Mikrocontroller als Slave arbeiten und die Kommunikation der Mikrocontroller untereinander software- und hardwaregesteuert ist.

Um einen Leistungszuwachs elektronischer Geräte, insbesondere bei Anwendungen für Speicherprogrammierbare Steuerungen im Low-Cost-Bereich, zu erreichen, setzt sich immer mehr das Konzept verteilter Systeme durch. Dies beruht auf die Kopplung mehrerer Mikrocontroller (Zentraleinheiten), wobei die unterschiedlichen Aufgaben der gekoppelten Mikrocontroller autark und parallel abgearbeitet werden. Die Mikrocontroller kommunizieren hierbei miteinander zwecks Synchronisation und Datenaustausch. Sind die Mikrocontroller nicht für eine Multiprozessorkopplung ausgelegt, wobei einer den anderen anhalten kann, so wird die Kopplung nach dem Stand der Technik über ein Dual-Port-RAM, oder über eine Verbindung der Portpins oder über serielle Kommunikation realisiert. Diesem Stand der Technik entsprechend ist mit der DE 30 07 519 C2 ein Mikrocomputer bekannt geworden, der als Master mit einem gleichartigen Mikrocomputer, der als Slave arbeitet, mittels serieller Kopplung über Portpins und seriellen Schnittstellen kommuniziert. Die US-Firmenschrift: MICROCONTROLLER, DATABOOK, National Semiconductor Corp., Santa Clara, CA, 1988, S. 4-35 bis 4-53 beschreibt einen Mikrocontroller, der ebenfalls für eine serielle Kommunikation in einem Master-Slave-Verfahren mit einem gleichartigen Mikrocontroller vorgesehen ist. Hier wird ein busfähiges Master-Slave-Verfahren beschrieben, wobei der Master jeweils einen von mehreren Slave's multiplext.

Die bekannten Verfahren sind entweder kostenintensiv oder benötigen einen erhöhten Aufwand an Verarbeitungszeit.

Die Erfindung stellt sich daher die Aufgabe, eine Speicherzugriffssteuerung für gekoppelte maskenprogrammierte Mikrocontroller, insbesondere bei Anwendungen für Speicherprogrammierbare Steuerungen im Low-Cost-Bereich anzugeben, wobei jedem Mikrocontroller eine andere Aufgabe zugeteilt ist, die autark und parallel abgearbeitet wird und dabei ein Datenaustausch ohne zusätzliches Dual-Port-RAM erfolgt und die Effizienz der einzelnen Mikrocontroller optimiert ist, wobei der Speicherzugriff auf einen externen Programm-Programm-/Datenspeicher mit geringem zusätzlichen Aufwand und einfachen Mitteln erfolgt.

Die Aufgabe wird erfindungsgemäß durch die kennzeichnenden Merkmale des Patentanspruchs 1 gelöst.

Die Unteransprüche 2 bis 9 kennzeichnen vorteilhafte und zweckmäßige Ausführungen der erfindungsgemäßen Speicherzugriffssteuerung.

Mit der erfindungsgemäßen Speicherzugriffssteuerung ist es gelungen, eine Kopplung mindestens zweier maskenprogrammierter Mikrocontroller, die auf einen gemeinsamen Progamm-/Datenspeicher zugreifen zu erreichen, die unter Ausnutzung der alternativen Portfunktionen, die softwaremäßig (Masken-Code) ausgeführt werden, eine kostengünstigere und effizientere Lösung zum Stand der Technik darstellt. Die erfindungungsgemäße Speicherzugriffssteuerung basiert auf eine hardwaremäßige Verdrahtungsschaltung im Zusammenspiel mit einem softwaremäßigen Handshake. Es greift immer nur ein Mikrocontroller auf den externen Programm-/Datenspeicher zu, während der andere auf den /internen Programmcode zugreift. Der Speicherzugriff wird vom Master-Mikrocontroller über ein Ausgangsport koordiniert. Hardwaremäßig wird das Speicher-Zugriffssignal und das Adressen-Freigabesignal für den zugriffsberechtigten Mikrocontroller gemultiplext. Dabei nutzt die hardwaremäßige Kopplung das bidirektionale Betreiben der E/A-Ports und deren alternative Funktionen. Diese können softwaremäßig als Eingang oder Ausgang geschaltet werden.

Im folgenden wird die Erfindung unter Bezugnahme auf die Zeichnungen anhand von Ausführungsbeispielen näher erläutert. Für diese Ausführungsbeispiele soll der maskenprogrammierbare 8bit-Einchip-Mikrocontroller MAB 8052 AH dienen, der eine Programmspeicher-Kapazität von 8KByte-ROM aufweist und als leistungsstarker Standard-Mikrocontroller insbesondere für Steuerungsaufgaben im Bereich der kleinen Speicherprogrammierbaren Steuerungen (SPS) Anwendung findet.

Die Zeichnungen zeigen:
**Fig.1** die Kopplung zweier Einchip-Mikrocontroller mit der erfindungsgemäßen Speicherzugriffssteuerung;
**Fig.2** die Kopplung mehrerer Einchip-Mikrocontroller mit der Speicherzugriffssteuerung nach der Erfindung;
**Fig.3** eine typische Anwendung für Speicherprogrammierbare Steuerungssysteme, wobei ein Mikrocontroller vom Typ 80515 als Master und ein Mikrocontroller vom Typ 8052 mittels der erfindungsgemäßen Speicherzugriffssteuerung miteinander gekoppelt sind und
**Fig.4** ein Zugriffsdiagramm mit dem Quittiungssignal des Slaves an den Master

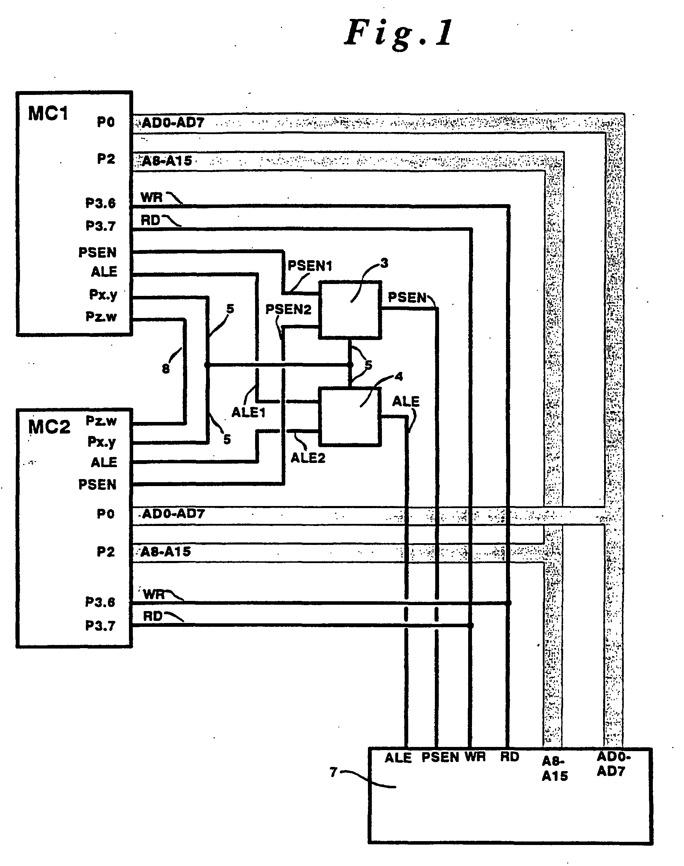

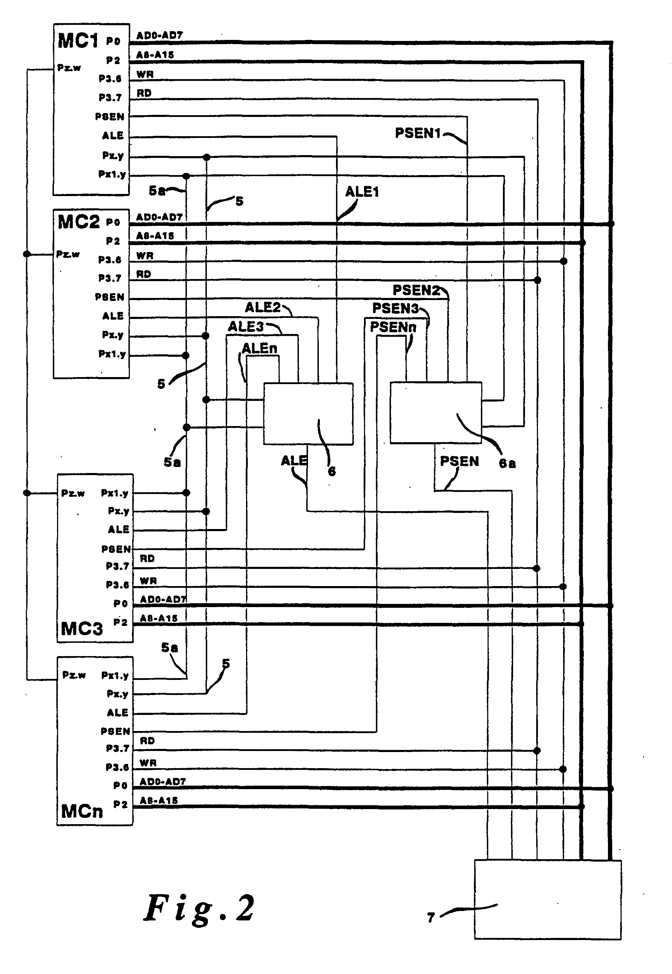

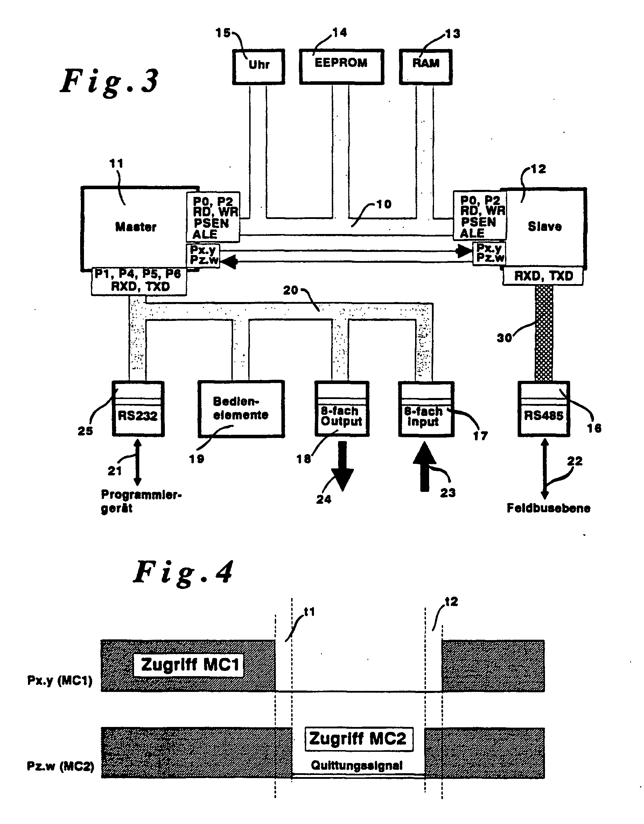

Die Fig.1 zeigt eine Kopplung zweier 8bit-Einchip-Mikrocontroller mit der erfindungsgemäßen Speicherzugriffssteuerung. Bei dieser und in Fig.2 dargestellten beispielhaften Applikation wird als Einchip-Mikrocontroller der Typ 8052 verwendet. Dagegen wir im Anwendungsbeispiel nach Fig.3 ein Mikrocontroller vom Typ 80515 mit einem 8052 gekoppelt. Es ist dabei von Bedeutung, daß es sich hier um gängige in der Industrie häufig eingesetzte Standard-Mikrocontroller handelt. Es sind allerdings gleichermaßen alle anderen maskenprogrammierbaren Mikrocontroller, d.h. Mikrocontroller mit internen Programmspeicher, für die Kopplung mit einer Speicherzugriffssteuerung nach der Erfindung zu verwenden.

In der beispielhaften Ausführung der Erfindung nach Fig.1 sind zwei Mikrocontroller MC1, MC2 gekoppelt. Bei dieser Applikation werden für den Zugriff auf den externen Programm-/Datenspeicher folgende Ports verwendet:

### - Port 0

Adresse Low und Datenbus. P0 ist ein echter bidirektionaler Port (Tristate). Beim Zugriff auf den externen Speicher wird in das spezielle Funktionsregister Einsen eingeschrieben.

### - Port 2

Adresse High. P2 ist ein quasi bidirektionaler Port ( mit Pull-up Widerstand). Wird der externe Programmspeicher angesprochen, so gibt Port 2 das obere Byte des Programmzählers aus, wird der externe Datenspeicher angesprochen, so stellt dieser Port entweder DPH (oberes Byte) oder den Wert des speziellen Funktionsregisters von Port 2 zur Verfügung. Das ist davon abhängig, mit welchem Programmcode der Zugriff auf den externen Speicher erfolgt. Das spezielle Funktionsregister P2 bleibt unverändert.

### - P3.6

WR- (Strobesignal zum Schreiben in den externen Datenspeicher). Der entsprechende Bit-Zwischenspeicher im speziellen Funktionsregister P3.6 muß eine Eins enthalten.

### - P3.7

RD- (Strobesignal zum Lesen aus den externen Datenspeicher). Der entsprechende Bit-Zwischenspeicher im speziellen Funktionsregister P3.7 muß eine Eins enthalten.

### - PSEN

Speicher-Zugriffssignal zum Lesezugriff auf externe Speicher. Beim Lesen des internen Speichers wird dieses Signal nicht aktiviert.

### - ALE

Adressen-Zugriffssignal für Adresse Low an Port 0. Dieses Signal wird aktiviert auch wenn kein externer Speicherzugriff stattfindet.

Px.y und Pz.w sind Handshakeports mit Alternativfunktion. Hierbei wird Port P0 für die Adressen/Daten AD0-AD7 und

Port P2 für die Adressen A8-A15 verwendet. Port P0 ist ein bidirektionaler 8bit-Open-Drain-E/A-Port, der bis zu 8LS-TTL-Lasten aufnehmen oder bei Busoperationen treiben kann. Port 2 ist ein bidirektionaler 8bit-E/A-Port mit internen Pull-up-Widerständen, der bis zu 4LS-TTL-Lasten aufnehmen bzw. treiben kann.

Durch die Typengleichheit der zwei gekoppelten Mikrocontroller sind die Anschlußbelegungen der Ports identisch.

Bei jedem Systemneustart erfolgt ein Reset und es ist zunächst einmal nur der als Master arbeitende Mikrocontroller MC1 für einen Speicherzugriff auf den externen Daten-/Programmspeicher 7 berechtigt. Die hardwaremäßige Auswahlschaltung besteht aus zwei 2 zu 1 Multiplexe 3, 4. Die zwei Eingänge des Multiplexers 3 sind mit den Speicherfreigabesignalen PSEN1 -Portanschluß PSEN des Masters MC1- und PSEN2 - Portanschluß PSEN des Slave MC2- belegt. Die zwei Eingänge des Multiplexers 4 sind mit den Adressen-Freigabesignalen ALE1 -Portanschluß ALE des Masters MC1- und ALE2 -Portanschluß ALE des Slave MC2- belegt. Der Portanschluß Px.y des Masters MC1 ist für Speicher-Zugriffsalternativfunktionen vorgesehen und wird von dem internen Masken-Code des Masters MC1 gesteuert und wird als Ausgang betrieben. Ist der Port Px.y auf "High" geschaltet kann nur der Master auf den externen Daten-/Programmspeicher 7 zugreifen. Der Masken-Code des Slaves MC2 betreibt seinen

Portanschluß Px.y als Eingang. Das Multiplexsignal 5 wird also vom Portausgang Px.y des Masters MC1 bestimmt und multiplext entsprechend bei "High"-Signal das Speicher-Zugriffssignal PSEN und das Adressen-Zugriffssignal ALE des Masters auf den Daten-/Programmspeicher 7. Gleichzeitig empfängt der Porteingang Px.y des Slaves MC2 dieses "High" -Signal und veranlaßt das Maskenprogramm des Slaves MC2 dazu, seine Ports P0...P3 als Eingänge zu betreiben. Soll nun Slave MC2 auf den externen Daten-/Programmspeicher zugreifen, schaltet Portausgang Px.y des Masters MC1 auf "Low"-Signal und veranlaßt die Multiplexer 3, 4 das Speicher-Zugriffssignal PSEN und das Adressen-Freigabesignal des Slaves MC2 zu multiplexen. Der Master MC1 bekommt durch seinen Masken-Code den Befehl, seine Ports P0...P3 als Eingänge zu betreiben und Slave MC2 erhält durch seinen Masken-Code die Freigabe, auf den externen Programm/Datenspeicher 7 zuzugreifen. Den Speicherzugriff des Slaves MC2 bestätigt ein Quittungssignal dem Master MC1, indem der Slave MC2 seinen sonst als Eingang (mit Pull-up-Widerstand) betriebenen Port Pz.w für die Zeit des Speicherzugriffs als Ausgang schaltet und dem Master MC1 durch ein "Low"-Signal seinen Zugriffsbeginn, Zugriffsdauer und Zugriffsende mitteilt. In Fig.4 ist das Zugriffsdiagramm mit dem Quittierungssignal dargestellt und verdeutlicht den vorab beschriebenen Vorgang. Die Kopplung der in diesem nach Fig.1 dargestellten Ausführungsbeispiel dargestellten 8bit-Mikrocontroller TYP 8052 und der externe Speicherzugriff der Mikrocontroller MC1, MC2 basiert auf der Hardware-Verdrahtungsschaltung im Zusammenspiel mit einen softwaremäßigen Handshake. Es greift immer nur einer der Mikrocontroller MC1, MC2 auf den externen Programm/Datenspeicher 7 zu, während der andere nur auf den internen Programmcode zugreift. Der Speicherzugriff wird vom Master MC1 über einen Output-Port Px.y koordiniert. Hardwaremäßig wird das Speicher-Zugriffssignal PSEN und das Adressen-Zugriffssignal ALE für den zugriffsberechtigten Mikrocontroller gemultiplext.

Greifen beide Mikrocontroller MC1, MC2 auf einen gemeinsamen Datenspeicher und nur der Mikrocontroller MC1 als Master auf den Programmspeicher zu, ist dabei das Multiplexen des Speicher-Zugriffssignal PSEN nicht nötig. In diesem Fall wird Portausgang PSEN vom Master zum Programm/Datenspeicher 7 direkt verdrahtet.

Die hardwaremäßige Kopplung nutzt das bidirektionelle Betreiben der E/A-Ports und deren alternative Funktion. Diese können softwaremäßig als Input oder Output geschaltet werden.

Die Fig.2 zeigt die Kopplung mehrerer Einchip-Mikrocontroller mit der Speicherzugriffssteuerung nach der Erfindung. Hierbei handelt es sich um Mikrocontroller gleichen Typ's und zwar wie in dem Ausführungsbeispiel nach Fig.1 um den 8052. Der Speicherzugriff der einzelnen Mikrocontroller wird genau wie in dem vorangegangenen Beispiel von dem als Master arbeitenden Mikrocontroller MC1 gehandelt und koordiniert. Die hardwaremäßige Verdrahtungsschaltung besteht hierbei auch aus zwei Multiplexer 6, 6a, die allerdings eine n zu 1 Selektion durchführen können. Dazu ist ein zusätzlicher Portausgang Px1.y notwendig und bei mehr als 4 gekoppelten Mikrocontrollern noch ein oder mehr weitere Portausgänge mit Alternativfunktion. Das Multiplexsignal wird aus den Steuerleitungen 5 und 5a gebildet. Die Codierung des Masters MC1, die sich aus den Signalen der Ports Px.y und Px1.y bildet, bestimmt, welcher als Slave arbeitende Mikrocontroller MC2...MCn Zugriff auf den externen Programm-/Datenspeicher haben soll. Alle nicht zum Speicherzugriff berechtigten Mikrocontroller schalten ihre Ports zu hochohmigen Eingängen und arbeiten autark, indem sie ihren internen Masken-Code abarbeiten. Dies ist besonders vorteilhaft in einer Anwendung, in der jeder Mikrocontroller mit einer eigenen Aufgabe betraut ist und diese unabhängig abarbeiten soll, wobei ein Zugriff auf den externen Speicher jederzeit möglich ist. Der Master MC1 entscheidet dabei allein, wann und wer auf den externen Programm-/Datenspeicher zugreifen soll.

Eine typische Anwendung für Speicherprogrammierbare Steuerungssysteme ist in der Fig.3 dargestellt. Hierbei ist ein Mikrocontroller vom Typ 80515 als Master 11 und ein Mikrocontroller vom Typ 8052 als Slave 12 mittels der erfindungsgemäßen Speicherzugriffssteuerung miteinander gekoppelt. Der Master kommuniziert über den Peripheriebus 20 mit seinen Ports P1, P4, P5, P6 mit den externen Eingängen 23 über die 8-fach Input-Baugruppe 17, den Ausgängen 24 über die 8-fach-Output-Baugruppe 18 und mit den Bedienelementen 19. Die Bedienelemente 19 können Sensoren für Testfunktionen, Run-Halt-LED, Kurzschlußanzeige, Error-Anzeige usw. sein. Weiter ist der Master 11 über den Peripheriebus 20 mit seiner seriellen Schnittstelle RXD,TXD über ein RS232-Interface mit einem Programmiergerät 21 verbunden. Über den Daten-/Adressbus 10 ist der Master mit seinen Ports P0, P2, RD, WR mit dem Programm-/Datenspeicher-RAM 13, einem das Betriebssystem beinhaltenden EEPROM 14 und einer Uhr 15 verbunden und parallel dazu mit dem Slave 12. Die hardwaremäßige Verdrahtungsschaltung mit den Multiplex-Bausteinen sind in diesem schematischen Schaltbild nicht dargestellt. Nach dem Systemneustart greift der Master auf den Programm-/Datenspeicher, das EEPROM 14 und die Uhr 15 zu. Das Anwenderprogramm wird vom Master MC1 im externen Programmspeicher abgearbeitet währenddessen der Slave 12 über seine serielle Schnittstelle RXD, TXD und dem seriellen Bus 30 auf die serielle RS485 16 auf die Feldbusebene 22 zugreift und mit beispielsweise dezentral angeordneten vernetzten Slaves kommuniziert. Ein Speicherzugriff des Slaves 12 wird wie in den vorbeschriebenen Beispielen aus Fig.1 und Fig.2 gesteuert. Der Master 11 übergibt dem Slave 12 den Speicherzugriff währenddessen die Kommunikation des Slaves über den Peripheriebus 20 aufrechterhalten bleibt. Der Slave 12 quittiert dem Master 11 seinen Speicherzugriff und das Zugriffsende.

In der Fig 4 ist ein Zugriffsdiagramm mit dem Quittungssignal des Slaves an den Master dargestellt. Solange Portausgang Px.y des Masters MC1 auf "High" ist hat der Master Zugriff auf den externen Programm-/Datenspeicher. Wird der Master MC1 nun durch sein Masken-Code dazu veranlaßt, seinen Portausgang Px.y auf "Low" zu schalten, erfolgt nach einer Zeit t1 das Quittungssignal des Slaves MC2, indem der sonst als Eingang betriebenen Port Pz.w als Ausgang und auf "Low" geschaltet wird. Nachdem der Slave MC2 fertig ist, schaltet er seinen Port Pz.w wieder als Eingang und meldet dem Master MC1 sein Zugriffsende. Nach einer Zeit t2 greift dann wieder der Master auf den externen Speicher zu.

## Patentansprüche

1. Speicherzugriffssteuerung für gekoppelte maskenprogrammierte Mikrocontroller, mit mindestens zwei über einen gemeinsamen Daten-/Adressbus auf ein gemeinsamen Programm-/Datenspeicher zugreifende Mikrocontroller, wobei einer der Mikrocontroller als Master und einer oder weitere Mikrocontroller als Slave arbeiten und die Kommunikation der Mikrocontroller untereinander software- und hardwaregesteuert ist, **dadurch gekennzeichnet, daß** alle zur Verfügung stehenden bidirektional betreibbaren Ports (P0...P3) und deren alternativ betreibbaren Portanschlüsse (Px.y, Pz.w) der Mikrocontroller (MC1-MC2) mittels Pin-zu-Pin-Verdrahtung parallelgeschaltet sind,
wobei der als Master arbeitende Mikrocontroller (MC1) mittels seines internen Maskenprogrammes entscheidet, welcher Mikrocontroller (MC1, MC2) die Zugriffsberechtigung auf den externen Programm-/Datenspeicher (7) haben soll, indem externe Speicherfreigabesignale (PSEN1, PSEN2) und Adressen-Freigabesignale (ALE1, ALE2) der Mikrocontroller (MC1, MC2) mittels logischer Mittel (3, 4) und einem vom als Ausgang betriebenen Port anschluß (Px.y) des Masters (MC1) ausgehenden Multiplexsignal (5) gemultiplext werden und als Speicher-Zugriffssignal (PSEN) und Adressen-Zugriffssignal (ALE) dem externen Programm-/Datenspeicher (7) zugeführt werden, wobei gleichzeitig das Multiplexsignal (5) dem Mikrocontroller (MC2) über seinen als Eingang betriebenen Portanschluß (Pz.w) den Speicherzugriff erteilt und der Mikrocontroller (MC1, MC2) der keine externe Speicherzugriffserlaubnis erhalten hat, seine bidirektional betreibbaren Ports (P0...P3) mittels seines Maskenprogrammes als hochohmige Eingänge betreibt.

2. Speicherzugriffssteuerung für gekoppelte maskenprogrammierte Mikrocontroller nach Anspruch 1, **dadurch gekennzeichnet, daß** bei drei oder mehr gekoppelten Mikrocontrollern (MC1, MC2, MC3...MCn) zwei oder mehr Portausgänge (Px.y, Px1.y) des als Master arbeitenden Mikrocontrollers (MC1) benutzt werden, um das Multiplexsignal (5, 5a) zu bilden und die externe Speicherfreigabesignale (PSEN1, PSEN2, PSEN3, ...PSENn) und Adresse-Freigabesignale (ALE1, ALE2, ALE3,...ALEn) der als Slaves arbeitenden Mikrocontroller (MC2...MCn) zu multiplexen und sie dem externen Programm-/Datenspeicher (7) als Speicher-Zugriffssignal (PSEN) und Adressen-Zugriffssignal (ALE) zuzuführen, wobei das Multiplexsignal (5, 5a) auf logische Mittel (6, 6a), die als n zu 1 Multiplexer ausgeführt sind, zugreift und gleichzeitig den angewählten Mikrocontroller (MC1, MC2) über dessen als Eingang betriebenen Portanschlüsse (Px.y, Px1.y) zum Speicherzugriff auffordert.

3. Speicherzugriffssteuerung für gekoppelte maskenprogrammierte Mikrocontroller nach den Ansprüchen 1 und 2, **dadurch gekennzeichnet, daß** der zum externen Speicherzugriff nicht berechtigte Mikrocontroller (MC1...MCn) erst dann wieder seine Ports (P0-P3) für den externen Speicherzugriff nutzt wenn er durch den Master (MC1) seine externe Speicherzugriffsberechtigung durch ein nur für ihn bestimmtes Multiplexsignal (5) erhält und sein Speicher-Freigabesignal (PSEN1...PSENn) und sein Adressen-Freigabesignal (ALE1...ALEn) aktiviert ist.

4. Speicherzugriffssteuerung für gekoppelte maskenprogrammierte Mikrocontroller nach den Ansprüchen 1 bis 3, **dadurch gekennzeichnet, daß** der als Master arbeitende Mikrocontroller (MC1) einen Masken-Code aufweist, mittels dem sein Portanschluß (Px.y) als Ausgang betrieben wird.

5. Speicherzugriffssteuerung für gekoppelte maskenprogrammierte Mikrocontroller nach den Ansprüchen 1 bis 4, **dadurch gekennzeichnet, daß** die Mikrocontroller (MC2...MCn) jeweils einen Masken-Code aufweisen, mittels den deren Portanschlüsse (Px.y) als Eingänge betrieben werden.

6. Speicherzugriffssteuerung für gekoppelte maskenprogrammierte Mikrocontroller nach den Ansprüchen 1 bis 5, **dadurch gekennzeichnet, daß** der Masken-Code des als Master arbeitenden Mikrocontrollers (MC1) seinen Portanschluß (Pz.w) als Eingang betreibt.

7. Speicherzügriffssteuerung für gekoppelte maskenprogrammierte Mikrocontroller nach den Ansprüchen 1 bis 6, **dadurch gekennzeichnet, daß** der Masken-Code eines jeden an den Master (MC1) gekoppelten Mikrocontroller (MC2...MCn) seinen Portanschluß (Pz.w) als Eingang mit Pull-up-Widerstand betreibt und nur während des externen Speicherzugriffs als Ausgang schaltet, um dem Master (MC1) einen externen Speicherzugriff zu melden.

8. Speicherzugriffssteuerung für gekoppelte maskenprogrammierte Mikrocontroller nach den Ansprüchen 1 bis 7, **dadurch gekennzeichnet, daß** der Master(MC1) an seinem Portanschluß (Pz.w) von dem von ihm für dencexternen Speicherzugriff vorgesehenen Mikrocontroller (MC1...MCn) ein Quittungssignal (8) empfängt, das ihm als Master den Speicherzugriff und das Speicherzugriffsende des Slaves bestätigt (Fig.4).

9. Speicherzugriffssteuerung für gekoppelte maskenprogrammierte Mikrocontroller nach den Ansprüchen 1 bis 8, **dadurch gekennzeichnet, daß** während einem der Mikrocontroller (MC1...MCn) der Zugriff auf den externen Programm-/Datenspeicher (7) zugeteilt ist, die übrigen Mikrocontroller (MC1...MCn) auf ihren internen Programmspeicher zugreifen und autark arbeiten.

## Claims

1. Memory access control for coupled mask-programmed microcontrollers, having at least two microcontrollers which access a common program/data memory via a common data/address bus, with one of the microcontrollers acting as the master and one or further microcontrollers acting as a slave or slaves, and the communication between the microcontrollers being controlled by software and hardware, **characterized**
**in that** all the available pores (P0...P3), which can be operated bi-directional and their port connections (Px.y, Pz.w), which can be operated alternatively, of the microcontrollers (MC1-MC2) are connected in parallel by means of pin-to-pin wiring,
with the microcontroller (MC1) which is acting as the master using its internal mask program to decide which microcontroller (MC1/ MC2) will have the access authorization to the external program/data memory (7), in that external memory enable signals (PSEN1, PSEN2) and address enable signals (ALE1, ALE2) of the microcontrollers (MC1, MC2) are multiplexed by logic means (3, 4) and a multiplex signal (5) which originates from the port connection (Px.y), which is operated as an output, of the master (MC1), and are supplied as a memory access signal (PSEN) and an address access signal (ALE) to the external program/data memory (7), with the multiplex signal (5) at the same time granting memory access for the microcontroller (MC2) via its port connection (Pz.w), which is operated as an output, and the microcontroller (MC1, MC2) which has not been granted external memory access permission operating its ports (P0...P3), which can be operated bidirectionally, by means of its mask program as high-impedance inputs.

2. Memory access control for coupled mask-programmed microcontrollers according to Claim 1, **characterized in that**, where there are three or more coupled microcontrollers (MC1, MC2, MC3...MCn), two or more port outputs (Px.y, Px1.y) of the microcontroller (MC1) which is operated as the master are used in order to form the multiplex signal (5, 5a), and to multiplex the external memory enable signals (PSEN1, PSEN2, PSEN3, ...PSENn) and address enable signals (ALE1, ALE2, ALE3, ...ALEn) of the microcontrollers (MC2...MCn) which are acting as slaves, and to supply them to the external program/data memory (7) as a memory access signal (PSEN) and an address access signal (ALE), with the multiplex signal (5, 5a) accessing logic means (6, 6a), which are in the form of n to 1 multiplexers, and at the same time requesting memory access for the selected microcontroller (MC1, MC2) via its port connections (Px.y, Px1.y) which are operated as an input.

3. Memory access control for coupled mask-programmed microcontrollers according to Claims 1 and 2, **characterized in that** the microcontroller (MC1...MCn) which is not authorized for external memory access uses its ports (P0-P3) for external memory access only when it receives its external memory access authorization by the master (MC1) by means of a multiplex signal (5) which is intended only for it, and its memory enable signal (PSEN1...PSENn) and its address enable signal (ALE1...ALEn) are activated.

4. Memory access control for coupled mask-programmed microcontrollers according to Claims 1 to 3, **characterized in that** the microcontroller (MC1) which is acting as the master has a mask code by means of which its port connection (Px.y) is operated as an output.

5. Memory access control for coupled mask-programmed microcontrollers according to Claims 1 to 4, **characterized in that** the microcontrollers (MC2...MCn) each have a mask code by means of which their port connections (Px.y) are operated as inputs.

6. Memory access control for coupled mask-programmed microcontrollers according to Claims 1 to 5, **characterized in that** the mask code of the microcontroller (MC1) which is acting as the master operates its port connection (Pz.w) as an input.

7. Memory access control for coupled mask-programmed microcontrollers according to Claims 1 to 6, **characterized in that** the mask code of each microcontroller (MC2...MCn) which is coupled to the master (MC1) operates its port connection (Pz.w) as an input with a pull-up resistor and switches it to be an output only during the external memory access, in order to signal to the master (MC1) an external memory access.

8. Memory access control for coupled mask-programmed microcontrollers according to Claims 1 to 7, **characterized in that**, at its port connection (Pz.w), the master (MC1) receives an acknowledgement signal (8) from the microcontroller (MC1...MCn) which is provided by it for the external memory access, which acknowledgement signal (8) confirms to it, as the master, the memory access and the end of memory access by the slave (Figure 4).

9. Memory access control for coupled mask-programmed microcontrollers according to Claims 1 to 8, **characterized in that**, while access to the external program/data memory (7) is assigned to one of the microcontrollers (MC1...MCn), the other microcontrollers (MC1...MCn) access their internal program memories, and operate autonomously.

## Revendications

1. Contrôle d'accès à la mémoire pour couplage de microcontrôleurs programmés par masque, comprenant au moins deux microcontrôleurs pouvant accéder à une mémoire de programmes / de données commune par le biais d'un bus de données / d'adresses commun, l'un des microcontrôleurs fonctionnant en tant que maître et l'un ou d'autres microcontrôleurs fonctionnant en tant qu'esclaves et la communication des microcontrôleurs entre eux étant commandée de manière logicielle et matérielle, **caractérisé en ce que** tous les ports disponibles pouvant être utilisés de manière bidirectionnelle (P0...P3) et leurs bornes de port pouvant être utilisées en alternance (Px.y, Pz.w) des microcontrôleurs (MC1-MC2) sont branchés en parallèle par un câblage broche à broche, le microcontrôleur fonctionnant en tant que maître (MC1) décidant ici au moyen de son programme par masque interne lequel des microcontrôleurs (MC1, MC2) doit avoir l'autorisation d'accès à la mémoire externe de programmes / de données (7) **en ce que** les signaux externes de libération de la mémoire (PSEN1, PSEN2) et les signaux de libération des adresses (ALE1, ALE2) des microcontrôleurs (MC1, MC2) sont multiplexés par des moyens logiques (3, 4) et un signal de multiplexage (5) émis par la borne de port (Px.y) utilisée comme sortie du maître (MC1), puis acheminés à la mémoire externe de programmes / de données (7) sous la forme d'un signal d'accès à la mémoire (PSEN) et d'un signal d'accès aux adresses (ALE), le signal de multiplexage (5) communiquant simultanément l'accès à la mémoire au microcontrôleur (MC2) par le biais de sa borne de port (Pz.w) utilisée comme entrée et le microcontrôleur (MC1, MC2) qui n'a pas obtenu d'autorisation d'accès à la mémoire externe utilisant ses ports utilisables de manière bidirectionnelle (P0...P3) en tant qu'entrées à haute impédance au moyen de son programme de masque.

2. Contrôle d'accès à la mémoire pour couplage de microcontrôleurs programmés par masque selon la revendication 1, **caractérisé en ce que** dans le cas d'un couplage de trois microcontrôleurs ou plus (MC1 MC2, MC3...MCn), deux sorties de port ou plus (Px.y, Px1.y) du microcontrôleur fonctionnant en tant que maître (MC1) sont utilisées pour former le signal de multiplexage (5, 5a) et pour multiplexer les signaux externes de libération de la mémoire (PSEN1, PSEN2, PSEN3, ...PSENn) et les signaux de libération des adresses (ALE1, ALE2, ALE3, ...ALEn) du microcontrôleur fonctionnant en tant qu'esclave (MC2...MCn) et les acheminer à la mémoire externe de programmes / de données (7) sous la forme d'un signal d'accès à la mémoire (PSEN) et d'un signal d'accès aux adresses (ALE), le signal de multiplexage (5, 5a) intervenant sur des moyens logiques (6, 6a) qui sont réalisés sous la forme de multiplexeurs n vers 1 et ordonne en même temps au microcontrôleur sélectionné (MC1, MC2) par le biais de sa borne de port utilisée comme entrée (Px.y, Px1.y) d'accéder à la mémoire.

3. Contrôle d'accès à la mémoire pour couplage de microcontrôleurs programmés par masque selon les revendications 1 et 2, **caractérisé en ce que** le microcontrôleur (MC1...MCn) non autorisé à accéder à la mémoire externe n'utilise de nouveau ses ports (P0-P3) pour l'accès à la mémoire externe qu'après avoir reçu de la part du maître (MC1) son autorisation d'accès à la mémoire externe par un signal de multiplexage (5) qui lui est exclusivement destiné et lorsque son signal de libération de la mémoire (PSEN1...PSENn) et son signal des adresses (ALE1...ALEn) sont activés.

4. Contrôle d'accès à la mémoire pour couplage de microcontrôleurs programmés par masque selon les revendications 1 à 3, **caractérisé en ce que** le microcontrôleur qui fonctionne en tant que maître (MC1) présente un code de masque au moyen duquel sa borne de port (Px.y) est utilisée comme sortie.

5. Contrôle d'accès à la mémoire pour couplage de microcontrôleurs programmés par masque selon les revendications 1 à 4, **caractérisé en ce que** les microcontrôleurs (MC2...MCn) présentent chacun un code de masque au moyen duquel leurs bornes de port (Px.y) sont utilisées comme entrées.

6. Contrôle d'accès à la mémoire pour couplage de microcontrôleurs programmés par masque selon les revendications 1 à 5, **caractérisé en ce que** le code de masque du microcontrôleur qui fonctionne en tant que maître (MC1) utilise sa borne de port (Pz.w) en tant qu'entrée.

7. Contrôle d'accès à la mémoire pour couplage de microcontrôleurs programmés par masque selon les revendications 1 à 6, **caractérisé en ce que** le code de masque de chacun des microcontrôleurs (MC2...MCn) qui sont couplés au microcontrôleur maître (MC1) utilise sa borne de port (Pz.w) en tant qu'entrée avec résistance de mise au positif et qu'il ne devient une sortie que pendant l'accès à la mémoire externe pour signaler au maître (MC1) un accès à la mémoire externe.

8. Contrôle d'accès à la mémoire pour couplage de microcontrôleurs programmés par masque selon les revendications 1 à 7, **caractérisé en ce que** le maître (MC1) reçoit sur sa borne de port (Pz.w) de la part du microcontrôleur (MC2...MCn) qui est prévu par lui pour l'accès à la mémoire externe un signal d'acquittement (8) qui lui confirme l'accès à la mémoire en tant que maître et la fin de l'accès à la mémoire de l'esclave (figure 4).

9. Contrôle d'accès à la mémoire pour couplage de microcontrôleurs programmés par masque selon les revendications 1 à 8, **caractérisé en ce que** pendant que l'accès à la mémoire externe de programmes / de données (7) est attribué à l'un des microcontrôleurs (MC1...MCn), les autres microcontrôleurs (MC1...MCn) peuvent accéder à leur mémoire de programmes interne et fonctionnent en autarcie.
